# EUROPEAN PATENT SPECIFICATION

(11) **EP 1 726 493 B1**
(45) Date of publication and mention of the grant of the patent: **22.10.2008**
(21) Application number: 06008790.5
(22) Date of filing: 27.04.2006
(51) Int. Cl.: B60R 22/44

(54) **Seatbelt retractor and seatbelt apparatus using the same**
Sitzgurtaufroller und Sitzgurtvorrichtung hierfür
Enrouleur-rétracteur de ceinture de sécurite et dispositif de ceinture utilisant cet enrouleur

(30) Priority: 27.05.2005 JP 2005155454
(43) Date of publication of application: 29.11.2006
(73) Proprietor: TAKATA CORPORATION, Minato-ku, Tokyo 106-8510 (JP)
(72) Inventor: Tanaka, Koji, c/o Takata Corporation, Tokyo 106-8510 (JP); Inuzuka, Koji, c/o Takata Corporation, Tokyo 106-8510 (JP)
(74) Representative: Vossius & Partner

(56) References cited:
- EP-A- 1 531 099
- EP-A- 1 666 317
- PATENT ABSTRACTS OF JAPAN vol. 2003, no. 12, 5 December 2003 (2003-12-05) & JP 2005 178552 A (TAKATA CORP), 7 July 2005 (2005-07-07)
- PATENT ABSTRACTS OF JAPAN vol. 1998, no. 06, 30 April 1998 (1998-04-30) & JP 10 053100 A (HINO MOTORS LTD; TOKAI RIKA CO LTD), 24 February 1998 (1998-02-24)

## Description

The present invention relates to a technical field of a seatbelt retractor provided on a vehicle such as a motor vehicle for retracting a seatbelt to constrain and protect a passenger by transmitting a drive torque of a motor to a spool via a power transmission mechanism and a seatbelt apparatus using the same.

A seatbelt apparatus provided on a vehicle such as a motor vehicle constrains the passenger by a seatbelt in case of emergency such as collision where a large deceleration is applied to a vehicle, thereby preventing a passenger from jumping out from a seat and protecting the passenger. The seatbelt apparatus is provided with a seatbelt retractor which constantly urges a spool for retracting the seatbelt in the belt retracting direction and prevents the seatbelt from being withdrawn by activating an emergency locking mechanism (ELR mechanism) upon emergency described above and locking rotation of the spool in the withdrawing direction.

As a seatbelt retractor as described above, a motor retractor that retracts and withdraws the seatbelt by rotating the spool by the drive torque of the motor is proposed in the related art (for example, see JP-A-2005-35485 (Patent Document 1)). According to the motor retractor in this type, since a tensile force of the seatbelt can be controlled by retracting the seatbelt by the motor, a wearing mode of the seatbelt can be set variously and hence constraint of the passenger by the seatbelt can be more suitably and meticulously according to a traveling state or the like of the vehicle.

The motor retractor disclosed in Patent Document 1 employs a power transmission gear mechanism having a predetermined number of gears as a power transmission mechanism for transmitting the drive torque of the motor to the spool. By covering the power transmission gear mechanism with a cover, foreign substances are prevented from coming into contact with or entering into the power transmission gear mechanism from the outside or entering between the gears that mesh with each other, and an operation noise which is generated when the power transmission gear mechanism is operated is constrained from leaking outside.

The motor retractor disclosed in Patent Document 1 is not provided with spring means which is provided in conventional non-motor driven seatbelt retractors for retracting the seatbelt when the seatbelt is not worn. A motor retractor having such the spring means is also proposed (for example, see JP-A-2005-53422 (Patent Document 2)).

The motor retractor disclosed in Patent Document 2 employs the power transmission gear mechanism having a predetermined number of gears as the power transmission mechanism for transmitting the drive torque of the motor to the spool, and is provided with the cover for covering the power transmission gear mechanism for the same object as Patent Document.

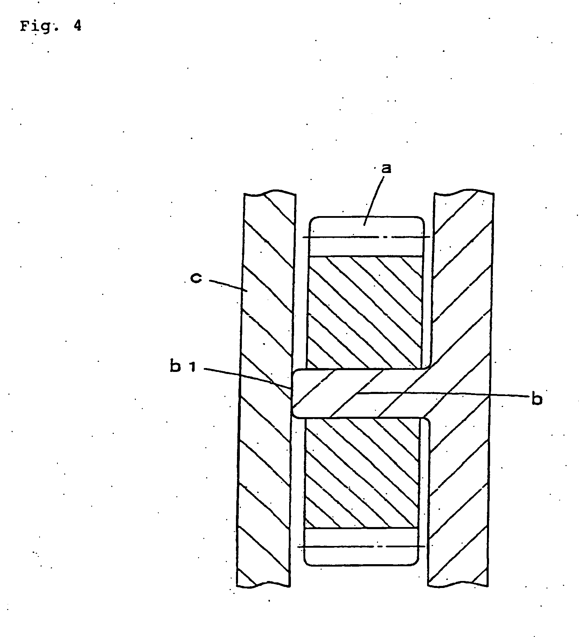

However, with the motor retractor in the related art as described above, although leakage of the operation noise generated by the power transmission gear mechanism to the outside is retrained by covering with the cover, generation of the operation noise of the power transmission gear mechanism by itself cannot be restrained.
For example, in the case of both of the power transmission gear mechanisms disclosed in Patent Documents 1 and 2, a gear a is supported on a revolving shaft b so as to be capable rotating integrally therewith as shown in Fig. 4. However, since the gear a is adapted to be capable of moving until it comes into abutment with a cover c, the gear a comes into contact with the cover c and hence hits the cover c while being rotated, and the hitting sound is propagated over the entire cover c and leaked toward the outside, which may cause a noise. In other words, there is a possibility that with the provision of the cover c, the sound to hit the cover c by the gear a may become the operation noise of the power transmission gear mechanism.

Normally, in order to prevent the gear a from coming apart from the revolving shaft b, the revolving shaft b is provided so as to come into contact with the cover c at a distal end b₁ thereof. In this case, the cover 9 cannot be moved, while a revolving shaft 12 can be moved (rotated). Therefore, a frictional sound may be generated as the operation noise of the power transmission gear mechanism between the cover 9 and the revolving shaft 12 during rotation of the revolving shaft 12.

EP-A1-1 531 099 which discloses background out corresponding to the preamble of claims 1 and 4 relates to a seat belt retractor for retracting a seat belt for restraining and protecting a passenger by actions of a motor, particularly to a seat belt retractor including a clutch mechanism for controlling engaging of a power transmission path.

For preventing noise in the clutch-disengaged mode, upon reverse rotation of a motor for rotating a spool an upper connecting gear is rotated in the clockwise direction, and both a clutch gear and a rotating shaft thereof are moved along a guide opening. The clutch gear separates from an outer teeth of a carrier gear, following which the clutch gear meshes with the inner teeth of a clutch gear stopping/holding portion. Upon the rotating shaft coming in contact with the right end of the guide opening, the movement of the clutch gear and the rotating shaft in the right direction is stopped and the rotation of the clutch gear is stopped. Thus, switching to the clutch-disengaged mode is completed. In this case, rotation of the clutch gear is stopped, thereby preventing noise due to rotation of other gears of the clutch mechanism and a power transmission mechanism.

In view of such circumstances, it is an object of the present invention to provide a motor-driven seatbelt apparatus in which generation of the operation noise of a power transmission mechanism can be minimized when the power transmission mechanism is operated, and a seatbelt apparatus using the same.

In order to solve the above-described problem, a seatbelt retractor according to the present invention at least includes a spool for retracting a seatbelt, a motor for generating a drive torque for rotating the spool, a power transmission mechanism for transmitting the drive torque of the motor to the spool, a cover for covering the power transmission mechanism, and operation noise restraining means for restraining generation of an operation noise when the power transmission mechanism is operated.

In the seatbelt retractor according to the present invention, the power transmission mechanism is a power transmission gear mechanism having a gear, and the operation noise generation restraining means is a space set between the cover and a revolving shaft that supports the gear so as to be capable of rotating integrally therewith for preventing the revolving shaft from coming into abutment with the cover.

In the seatbelt retractor according to the present invention, the power transmission mechanism is the power transmission gear mechanism having the gear and the revolving shaft that supports the gear so as to be capable of rotating integrally therewith is provided with movement preventing means for preventing the gear from moving in the direction of an axis of the revolving shaft for avoiding abutment between the gear and the cover, and the movement preventing means is the operation noise generation restricting means.

In the seatbelt retractor according to the present invention, the movement preventing means includes a groove provided on the revolving shaft and a ring-shaped stopper fitted to the groove.

A seatbelt apparatus according to the present invention at least includes a seatbelt for constraining a passenger, a seatbelt retractor for retracting the seatbelt so as to be capable of being withdrawn, a tongue supported by the seatbelt so as to be capable of sliding, and a buckle provided on a vehicle body or a vehicle seat so that the tongue can be engaged with, and is characterized in that the seatbelt retractor is the above described seatbelt retractor.

With the seatbelt retractor configured as described above, since the operation noise restraining means is provided, generation of the operation noise when the power transmission mechanism is operated can effectively be restrained. In addition, by combining a leakage restraining function of the cover for restraining leakage of the operation noise of the power transmission gear mechanism toward the outside, noise caused by leakage of the operation noise of the power transmission gear mechanism toward the outside can be restrained further effectively.

In particular, with the seatbelt retractor according to the present invention, since the operation noise generation restraining means is composed of a space provided between the cover and the revolving shaft that supports the gear, the revolving shaft can be prevented form coming into contact with the cover. Accordingly, generation of a frictional sound of the revolving shaft with respect to the cover during rotation of the revolving shaft can be prevented, and hence the operation noise of the power transmission gear mechanism can be prevented effectively.
In addition, since the operation noise restraining means is composed of the simple space, the structure can be simplified.

With the seatbelt retractor according to the present invention, since the movement preventing means for preventing movement of the gear in the direction of the axis of the revolving shaft for preventing abutment of the gear with the cover, the gear can be prevented from coming into contact with the cover during rotation thereof. Accordingly, generation of sound of hitting the cover by the gear can be prevented, and hence the operating noise can be effectively restrained.

Furthermore, since the movement preventing means includes the groove on the revolving shaft and the ring-shaped stopper fitted in the groove, the movement preventing means can be simplified.

In addition, according to the seatbelt apparatus of the present invention, since the seatbelt retractor as described above is employed as the seatbelt retractor, the operation noise of the power transmission gear mechanism of the seatbelt retractor can be restrained even when it is operated, whereby a cabin can be a comfortable space during the drive of the vehicle.

Referring now to the drawings, a best mode for carrying out the present invention will be described.
Fig. 1 is a sketch drawing showing an example of an embodiment of a seatbelt retractor according to the present invention;
Fig. 2 is a partially enlarged cross-sectional view showing part of a power transmission mechanism in the seatbelt retractor in the example shown in Fig. 1 in an enlarged scale;
Fig. 3 is a sketch drawing showing an example of a seatbelt apparatus using the seatbelt retractor in the example shown in Fig. 1; and
Fig. 4 is a partially enlarged cross-sectional view like Fig. 2 for explaining drawbacks of a power transmission gear mechanism in a motor retractor in the related art.

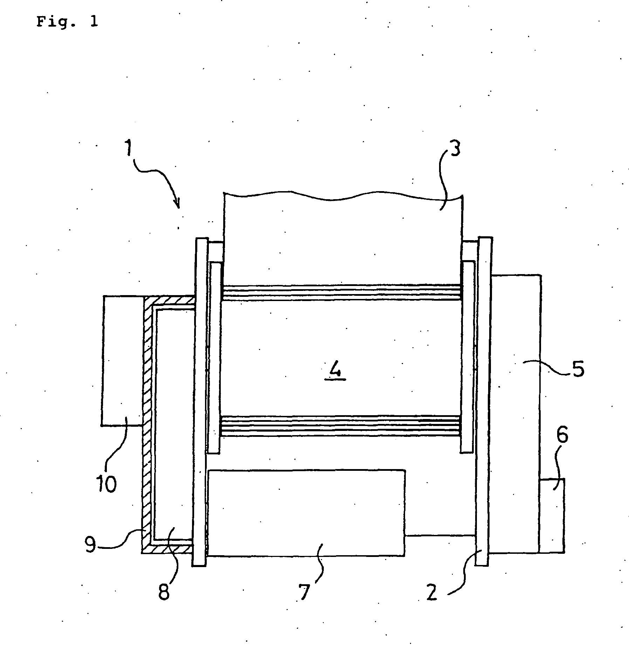

As shown in Fig. 1, a seatbelt retractor 1 in this example roughly includes a frame 2, a seatbelt 3 that constrains a passenger when needed, a spool 4 that retracts the seatbelt 3 so as to be capable of being withdrawn, locking means 5 as an ELR mechanism that is provided on one side of the frame 2 and is activated upon a significant deceleration exceeding predetermined deceleration such as a collision and prevents rotation of the spool 4 in a belt withdrawing direction, deceleration sensing means (vehicle sensor) 6 that is activated when deceleration exceeding a predetermined value is applied to a vehicle to activate the locking means 5, a motor 7 that generates a drive torque to be applied to the spool 4, a power transmission gear mechanism (corresponding to the power transmission mechanism of the present invention) 8 that reduces the speed of the drive torque of the motor 7 and transmits the same to the spool 4, a cover 9 fixed to the frame 2 for covering the power transmission gear mechanism 8, and spring means 10 for constantly urging the spool 4 in a retracting direction.

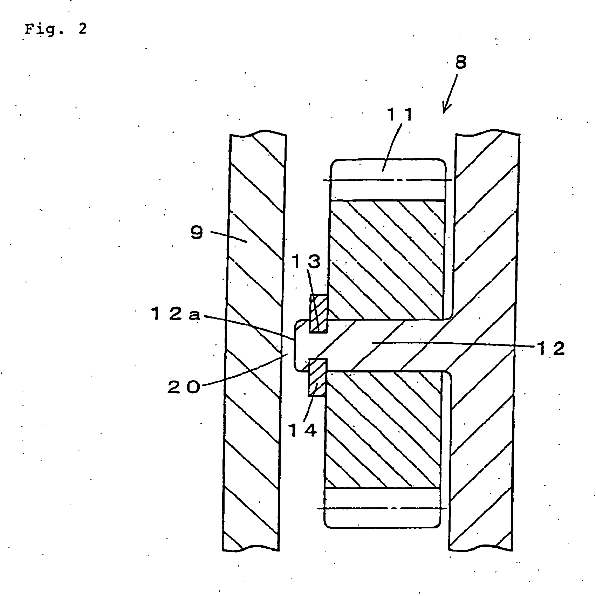

The frame 2, the seatbelt 3, the spool 4, the locking means 5, the deceleration sensing means (vehicle sensor) 6, the motor 7, the cover 9 and the spring means 10 are all the same as those in Patent Document 2 described above. As shown in Fig. 2, the power transmission gear mechanism 8 is the same of the power transmission gear mechanism in Patent Document 2 other than a portion shown in Fig. 2.

In other words, as shown in Fig. 2, in the power transmission gear mechanism 8 in this example, a gear 11 which is in the proximity of the cover 9 is supported on a revolving shaft 12 so as to be capable of rotating integrally therewith, while it can be moved in an axial direction of the revolving shaft 12. The gear 11 in the proximity of the cover 9 means the gear that can come into contact with the cover 9 during rotation.

The revolving shaft 12 is formed with an annular groove 13, and a ring-shaped stopper 14 is fitted to the annular groove 13 on the cover 9 side with respect to the gear 11 so as not to be capable of moving in the axial direction of the revolving shaft 12 and rotatable integrally with the revolving shaft 12. The stopper 14 may be a snap ring which is known in the related art, but is not limited thereto. With the provision of the stopper 14, movement of the gear 11 in the axial direction of the revolving shaft 12 is prevented, so that the gear 11 does not come in contact with the cover 9 during rotation. Movement preventing means or operation noise generation restraining means of the present invention are constituted by the provision of the groove 13 and the stopper 14.

Formed between a distal end of the revolving shaft 12, that is, between an opposing end 12a opposing to the cover 9 and the cover 9 is a space (clearance) 20, and the space 20 prevents the opposing end 12a of the revolving shaft 12 from coming into contact with the cover 9. The operation noise restraining means of the present invention is constituted by the space 20.

According to the seatbelt retractor 1 in this example that is configured as described above, since the stopper 14 fitted to the groove 13 of the revolving shaft 12 so as not to be moved in the axial direction, when the power transmission gear mechanism 8 is operated and hence the gear 11 is rotated, the axial movement of the gear 11 toward the cover 9 can be prevented by the stopper 14. Accordingly, the gear 11 can be prevented from coming into contact with the cover 9 during its rotation, and hence generation of sound to hit the cover 9 by the gear 11 can be prevented. Consequently, the operation noise of the power transmission gear mechanism 8 can effectively be prevented. In addition, by combining a leakage restraining function of the cover 9 for restraining leakage of the operation noise of the power transmission gear mechanism 8 toward the outside, the operation noise of the power transmission gear mechanism 8 toward the outside can be shut down further effectively.

Since the axial movement of the gear 11 toward the cover 9 is prevented with the groove 13 on the revolving shaft 12 and the ring-shaped stopper 14 fitted to the groove 13, the movement preventing means can be achieved in a simple structure.

In addition, since the operation noise restraining means is configured by the space 20 provided between the cover 9 and the opposing end 12a of the revolving shaft 12, the revolving shaft 12 is prevented from coming into contact with the cover 9. Accordingly, generation of the frictional sound of the revolving shaft 12 with respect to the cover 9 during rotation of the revolving shaft 12 can be prevented, and hence the operation noise of the power transmission gear mechanism 8 can be prevented effectively. In addition, since the operation noise restraining means is composed of the simple space 20, the structure can be simplified.

The seatbelt retractor 1 can be applied to the seatbelt retractor 1 employed in the seatbelt apparatus known in the related art.

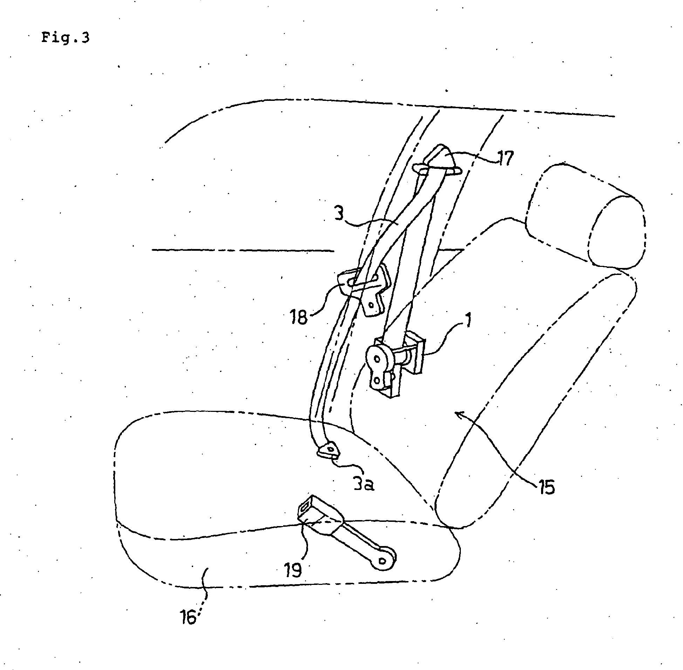

Fig. 3 is a sketch drawing showing an example of the seatbelt apparatus 15 using the seatbelt retractor in this example.
As shown in Fig. 3, a seatbelt apparatus 15 in this example includes the seatbelt retractor 1 in this example fixed to a vehicle body, the seatbelt 3 to be withdrawn from the seatbelt retractor 1 and to be fixed to a floor of the vehicle body or a vehicle seat 16 via a belt anchor 3a at a distal end thereof, a guide anchor 17 for guiding the seatbelt 3 withdrawn from the seatbelt retractor 1 to a shoulder of the passenger, a tongue 18 supported by the seatbelt 3 guided from the guide anchor 17 so as to be capable of sliding movement, and a buckle 19 which is fixed to the floor of the vehicle body or the vehicle seat and which the tongue 18 is inserted in and engaged with so as to be capable of engagement and disengagement.
The effects and advantages of the seatbelt apparatus 15 in this example is the same as the effects and advantages of the seatbelt apparatus 1 described above, and the effects and advantages of other parts are the same as the effects and advantages of the seatbelt apparatus known in the related art.

According to the seatbelt apparatus 15 in this example, since the seatbelt retractor 1 in this example is used, the operation noise can be restrained even when the power transmission gear mechanism 8 of the seatbelt retractor is operated, whereby a cabin can be a comfortable space during the drive of the vehicle.

In the example described above, the movement preventing means of the gear 11 is composed of the annular groove 13 and the ring-shaped stopper 14. However, instead of the groove 13 and the stopper 14, it may be composed of a radial hole provided on the revolving shaft 12 and a pin to be fitted into the radial hole.

In the example described above, the power transmission gear mechanism disclosed in Patent Document 2 is employed as the power transmission gear mechanism 8. However, it not limited thereto, and may be any known power transmission gear mechanism, for example, the power transmission gear mechanism disclosed in Patent Document 1 as long as they are the power transmission gear mechanism that can be applied to the motor retractor. Furthermore, the power transmission mechanism is not limited to the power transmission gear mechanism, and may be any known power transmission mechanism such as a power transmission mechanism composed of a pulley and an endless belt as long as it can be applied to the motor retractor.
In addition, the spring means 10 may be omitted as in the case of the seatbelt retractor disclosed in Patent Document 1.

## Claims

1. A seatbelt retractor comprising at least : a spool (4) for retracting a seatbelt (3); a motor (7) for generating a drive torque for rotating the spool (4); a power transmission mechanism (8) for transmitting the drive torque of the motor (7) to the spool (4); a cover (9) for covering the power transmission mechanism (8); and operation noise restraining means for restraining generation of an operation noise when the power transmission mechanism (8) is operated,
**characterized in that**
the power transmission mechanism (8) is a power transmission gear mechanism having a gear (11), and
the operation noise generation restraining means is a space (20) set between the cover (9) and a revolving shaft (12) that supports the gear (11) so as to be capable of rotating integrally therewith for preventing the revolving shaft from coming into abutment with the cover.

2. The seatbelt retractor according to Claim 1, wherein the power transmission mechanism (8) is the power transmission gear mechanism having the gear (11) and the revolving shaft (12) that supports the gear (11) so as to be capable of rotating integrally therewith is provided with movement preventing means for preventing the gear (11) from moving in the direction of an axis of the revolving shaft (12) for avoiding abutment between the gear (11) and the cover (9), and
the movement preventing means is the operation noise generation restricting means.

3. The seatbelt retractor according to Claim 2, wherein the movement preventing means comprises a groove (13) provided on the revolving shaft (12) and a ring-shaped stopper (14) fitted to the groove (13).

4. A seatbelt retractor comprising at least: a spool (4) for retracting a seatbelt (3); a motor (7) for generating a drive torque for rotating the spool (4); a power transmission mechanism (8) for transmitting the drive torque of the motor (7) to the spool (4); a cover (9) for covering the power transmission mechanism (8); and operation noise restraining means for restraining generation of an operation noise when the power transmission mechanism (8) is operated,
**characterized in that**
the power transmission mechanism (8) is the power transmission gear mechanism having a gear (11) and a revolving shaft (12) that supports the gear (11) so as to be capable of rotating integrally therewith and that is provided with movement preventing means (13, 14) for preventing the gear (11) from moving in the direction of an axis of the revolving shaft (12) for avoiding abutment between the gear (11) and the cover (9), wherein
the movement preventing means (13, 14) is the operation noise generation restricting means.

5. The seatbelt retractor according to Claim 4, wherein the movement preventing means comprises a groove (13) provided on the revolving shaft (12) and a ring-shaped stopper (14) fitted to the groove (13).

6. A seatbelt apparatus comprising at least: a seatbelt (3) for constraining a passenger; a seatbelt retractor (1) for retracting the seatbelt (3) so as to be capable of being withdrawn; a tongue supported by the seatbelt so as to be capable of sliding; and a buckle (19) provided on a vehicle body or a vehicle seat so that the tongue can be engaged with, **characterized in that** the seatbelt retractor (1) is the seatbelt retractor according to any one of Claim 1 to Claim 5.

## Patentansprüche

1. Sitzgurtaufroller mit mindestens:
einer Rolle (4) zum Aufrollen des Sitzgurtes (3); einem Motor (7) zum Erzeugen eines Antriebs-Drehmoments zum Drehen der Rolle (4); eine Kraftübertragungseinrichtung (8) zum Übertragen des Antriebs-Drehmoments des Motors (7) auf die Rolle (4); eine Abdeckung (9) zum Abdecken der Kraftübertragungseinrichtung (8); und einer Betriebsgeräuschunterdrückungseinrichtung zum Unterdrücken der Erzeugung von Betriebsgeräuschen beim Betreiben der Kraftübertragungseinrichtung (8),
**dadurch gekennzeichnet, dass**
die Kraftübertragungseinrichtung (8), eine Kraftübertragungsgetriebeeinrichtung mit einem Zahnrad (11) ist und die Betriebsgeräuschunterdrückungseinrichtung ein Freiraum (20) zwischen der Abdeckung (9) und einer Drehwelle (12) ist, die das Zahnrad (11) trägt, so dass es sich damit drehen kann, um ein Berühren der Drehachse mit dem Gehäuse zu verhindern.

2. Sitzgurtaufroller nach Anspruch 1, wobei die Kraftübertragungseinrichtung (8) die Kraftübertragungsgetriebeeinrichtung mit dem Zahnrad (11) ist und die Drehwelle (12), die das Zahnrad (11) trägt, so dass es sich damit drehen kann, eine Bewegungsunterdrückungseinrichtung aufweist, um zu verhindern, dass sich das Zahnrad (11) in Richtung der Achse der Drehwelle (12) bewegt, um eine Berührung zwischen dem Zahnrad (11) und der Abdeckung (9) zu verhindern, und
die Bewegungsunterdrückungseinrichtung die Betriebsgeräuschunterdrückungseinrichtung ist.

3. Sitzgurtaufroller nach Anspruch 2, wobei die Bewegungsunterdrückungseinrichtung eine Nut (13) an der Drehwelle (12) und einen an die Nut (13) angepassten, ringförmigen Anschlag (14) aufweist.

4. Sitzgurtaufroller mit mindestens:
einer Rolle (4) zum Aufrollen des Sitzgurtes (3); einem Motor (7) zum Erzeugen eines Antriebs-Drehmoments zum Drehen der Rolle (4); eine Kraftübertragungseinrichtung (8) zum Übertragen des Antriebs-Drehmoments des Motors (7) auf die Rolle (4); eine Abdeckung (9) zum Abdecken der Kraftübertragungseinrichtung (8); und einer Betriebsgeräuschunterdrückungseinrichtung zum Unterdrücken der Erzeugung von Betriebsgeräuschen beim Betreiben der Kraftübertragungseinrichtung (8),
**dadurch gekennzeichnet, dass**
die Kraftübertragungseinrichtung (8) eine Kraftübertragungsgetriebeeinrichtung mit einem Zahnrad (11) und einer Drehwelle (12) ist, an der das Zahnrad (11) befestigt ist, so dass es sich damit drehen kann, und eine Bewegungsunterdrückungseinrichtung (13, 14) aufweist, um zu verhindern, dass sich das Zahnrad (11) in Richtung der Achse der Drehwelle (12) bewegt, um eine Berührung zwischen dem Zahnrad (11) und der Abdeckung (9) zu verhindern, wobei
die Bewegungsunterdrückungseinrichtung (13, 14) die Betriebsgeräuschunterdrückungseinrichtung ist.

5. Sitzgurtaufroller nach Anspruch 4, wobei die Bewegungsunterdrückungseinrichtung eine Nut (13) an der Drehwelle (12) und einen an die Nut (13) angepassten, ringförmigen Anschlag (14) aufweist.

6. Sitzgurtvorrichtung mit mindestens einem Sitzgurt (3) zum Rückhalten des Passagiers; einem Sitzgurtaufroller (1) zum Aufrollen des Sitzgurtes (3), so dass er zurückgezogen werden kann; eine an dem Sitzgurt entlang bewegbare Einstecklasche; und einem an einem Fahrzeugkörper oder an einem Fahrzeugsitz vorgesehenes Gurtschloss (19), in das die Einstecklasche einklinkbar ist,
**dadurch gekennzeichnet, dass** der Sitzgurtaufroller (1) ein Sitzgurtaufroller nach einem der Ansprüche 1 bis 5 ist.

## Revendications

1. Enrouleur-rétracteur de ceinture de sécurité, comprenant au moins : une bobine (4) pour rétracter une ceinture de sécurité (3) ; un moteur (7) pour générer un couple d'entraînement pour entraîner la bobine (4) en rotation ; un mécanisme de transmission de puissance (8) pour transmettre le couple d'entraînement du moteur (7) à la bobine (4) ; un couvercle (9) pour couvrir le mécanisme de transmission de puissance (8) et des moyens de restriction de bruit de fonctionnement pour restreindre la génération d'un bruit de fonctionnement quand le mécanisme de transmission de puissance (8) est actionné,
**caractérisé en ce que**
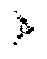 le mécanisme de transmission de puissance (8) est un mécanisme de transmission de puissance à engrenage comportant un engrenage (11), et
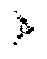 les moyens de restriction de génération de bruit de fonctionnement sont formés par un espace (20) établi entre le couvercle (9) et un arbre rotatif (12) qui supporte l'engrenage (11) de sorte à pouvoir tourner d'un seul tenant avec celui-ci afin d'empêcher l'arbre rotatif de buter contre le couvercle.

2. Enrouleur-rétracteur de ceinture de sécurité selon la revendication 1, dans lequel le mécanisme de transmission de puissance (8) est le mécanisme de transmission de puissance à engrenage comportant l'engrenage (11), et l'arbre est muni rotatif (12) qui supporte l'engrenage (11) de sorte à pouvoir tourner d'un seul tenant avec celui-ci de moyens d'opposition au mouvement pour empêcher l'engrenage (11) de se déplacer dans le sens d'un axe de l'arbre rotatif (12) pour éviter une butée entre l'engrenage (11) et le couvercle (9), et
les moyens d'opposition au mouvement sont les moyens de restriction de génération de bruit de fonctionnement.

3. Enrouleur-rétracteur de ceinture de sécurité selon la revendication 2, dans lequel les moyens d'opposition au mouvement comprennent une rainure (13) apportée sur l'arbre rotatif (12) et une butée annulaire (14) adaptée sur la rainure (13).

4. Enrouleur-rétracteur de ceinture de sécurité, comprenant au moins un élément parmi : une bobine (4) pour rétracter une ceinture de sécurité (3) ; un moteur (7) pour générer un couple d'entraînement afin d'entraîner la bobine (4) en rotation ; un mécanisme de transmission de puissance (8) pour transmettre le couple d'entraînement du moteur (7) à la bobine (4) ; un couvercle (9) pour couvrir le mécanisme de trans-mission de puissance (8) ; et des moyens de limitation de bruit de fonctionnement pour limiter la génération d'un bruit de fonctionnement quand le mécanisme de transmission de puissance (8) est actionné,
**caractérisé en ce que**
le mécanisme de transmission de puissance (8) est le mécanisme de transmission de puissance à engrenage comportant un engrenage (11) et un arbre rotatif (12) qui supporte l'engrenage (11) de sorte à pouvoir tourner d'un seul tenant avec celui-ci et qui est muni de moyens d'opposition au mouvement (13, 14) pour empêcher l'engrenage (11) de se déplacer dans le sens d'un axe de l'arbre rotatif (12) pour éviter une butée entre l'engrenage (11) et le couvercle (9), dans lequel
les moyens d'opposition au mouvement (13, 14) sont les moyens de limitation de génération de bruit de fonctionnement.

5. Enrouleur-rétracteur de ceinture de sécurité selon la revendication 4, dans lequel les moyens d'opposition au mouvement comprennent une rainure (13) apportée sur l'arbre rotatif (12) et une butée annulaire (14) adaptée sur la rainure (13).

6. Appareil de ceinture de sécurité, comprenant au moins : une ceinture de sécurité (3) pour retenir un passager ; un enrouleur-rétracteur de ceinture de sécurité (1) pour rétracter la ceinture de sécurité (3) de manière à ce qu'elle puisse être retirée ; une languette supportée par la ceinture de sécurité manière à pouvoir coulisser ; et une boucle (19) apportée sur un corps de véhicule ou un siège de véhicule de manière à ce que la languette puisse être engagée dans celle-ci, **caractérisé en ce que** l'enrouleur-rétracteur de ceinture de sécurité (1) est l'enrouleur-rétracteur de ceinture de sécurité selon l'une quelconque des revendications 1 à 5.
